# EUROPÄISCHE PATENTSCHRIFT

(11) **EP 0 402 703 B1**
(45) Veröffentlichungstag und Bekanntmachung des Hinweises auf die Patenterteilung: **15.02.1995**
(21) Anmeldenummer: 90110244.2
(22) Anmeldetag: 30.05.1990
(51) Int. Cl.: B65H 67/06

(54) **Textilmaschine mit einem automatischen Transportsystem zum Transport von Textilspulen beziehungsweise Hülsen**
Textile machine with an automatic tranport system to transport textile bobbins or spools
Machine textile avec un système de transport automatique pour transporter des bobines ou des tubes textiles

(30) Priorität: 10.06.1989 DE 3919106; 12.04.1990 DE 4011797
(43) Veröffentlichungstag der Anmeldung: 19.12.1990
(73) Patentinhaber: W. SCHLAFHORST AG & CO., D-41061 Mönchengladbach (DE)
(72) Erfinder: Grecksch, Hans, D-4050 Mönchengladbach 5 (DE); Mayer, Rolf, D-4050 Mönchengladbach 2 (DE); Lys, Michael, D-4040 Neuss 1 (DE); Kohlen, Helmut, D-5140 Erkelenz (DE); Radziejewski, Gerhard, D-4050 Möchengladbach 1 (DE)
(74) Vertreter: Hamann, Arndt, Dipl.-Ing.

(56) Entgegenhaltungen:
- EP-A- 0 029 614
- DE-A- 3 326 537
- DE-A- 3 742 112

## Beschreibung

Die Erfindung betrifft eine automatische Textilmaschine nach dem Oberbegriff des Anspruches 1.

Durch die DE-OS 17 60 689 ist es bekannt, von einer Spinnmaschine kommende Kopse einzeln auf Paletten aufzusetzen und mit diesen den Spulstellen einer Spulmaschine zuzuführen. Die Kopse verbleiben während des Abspulens auf dieser Palette und werden nachher als Hülse gemeinsam mit der Palette aus der Spulstelle wieder ausgetragen. Durch diese Maßnahme kann eine Schonung, insbesondere der äußeren Fadenlagen der Kopse, erreicht werden.

Aufbauend auf dem Grundprinzip des Transportes der Kopse und Hülsen auf Paletten offenbart die JP-OS 52-25 139 ein Transportsystem, bei dem die Paletten in einem geschlossenen Kreislauf auf Transportbändern transportiert und durch Führungsschlitze geführt werden.

Ein geschlossener Transportkreislauf für Paletten innerhalb einer Spulmaschine ist beispielsweise auch durch die DE-A-33 26 527 bekannt.

Bei den meisten derartigen Transportsystemen werden die Paletten durch Reibschluß von Transportbändern mitgenommen, auf denen sie aufliegen. Bei diesen Systemen werden die Paletten prinzipiell innerhalb eines Führungsschlitzes an ihrem mittig aus der Grundplatte herausragenden Sockel geführt.

Dabei sind innerhalb des Transportsystems drehende Teile zum Beispiel von Umlenkrollen der Förderbänder oder Transportrollen in Bereichen der Richtungsänderungen, sowie in die Transportbahnen eingreifende Teile von Weichen oder Stoppern vorgesehen, wodurch Schleppfäden erfaßt werden können. Dadurch kann die Funktionsfähigkeit des Transportsystems stark beeinträchtigt werden.

Durch die gattungsfremde EP-A-0 029 614 ist eine Vorrichtung zum seitlichen Ablenken von Gegenständen, insbesondere Flaschen, von einer ersten Bewegungsbahn auf eine zweite Bewegungsbahn bekannt. Diesem Dokument liegt vor allem das Problem zugrunde, mit der gegenüber dem Transport von Paletten in einer Spulmaschine mehrfachen Geschwindigkeit und mehrfachen Transportdichte ankommende Gegenstände zuverlässig zu sortieren. Dieses Problem der hohen Transportgeschwindigkeit und hohen Transportdichte der Gegenstände wird durch eine an einer Abzweigung angeordnete Reihung von Stößeln, Blasdüsen oder Magneten bewältigt. Dabei beschränkt sich der Einsatz einer Reihung von Magneten auf Gegenstände, die selbst starke magnetische Eigenschaften besitzen.

Aufgabe der Erfindung ist es deshalb, eine Textilmaschine vorzuschlagen, in der die Paletten, auf die Textilspulen beziehungsweise Hülsen aufgesetzt sind, mittels Vorrichtungen transportiert und positioniert werden, die die Funktionsfähigkeit des Transportsystemes nicht beeinträchtigen.

Diese Aufgabe wird erfindungsgemäß durch die Merkmale des Anspruches 1 gelöst.

Der Hauptvorteil der Erfindung ergibt sich dadurch, daß Elemente zum Stoppen, Steuern und Transportieren, die erfindungsgemäß mittels Magnetkräften arbeiten, keine Teile besitzen, die unmittelbar in die Transportbahn eingreifen. Die Elemente lassen sich sehr vorteilhaft zentral steuern und sind nur dann wirksam, wenn dies zu diesem Zeitpunkt auch erforderlich ist. Besonders vorteilhaft ist auch, daß direkt an den Transportwegen keine oder nur in geringer Anzahl drehende oder klemmende Teile vorhanden sind.

Die spezielle Gestaltung von Magneten, die an Transportwegen der Paletten angeordnet sind, auf denen sie mittels Reibschluß durch Transportbänder befördert werden, mit einem Abrollprofil erhöht die Effektivität der Magneten. Dadurch ist es möglich, mit geringer dimensionierten Magneten beziehungsweise mit einer geringeren Magnetkraft die Paletten zu stoppen. Außerdem wird auf diese Weise ein Vereinzeln von Paletten auch mit einem Magneten in Verbindung mit einem Stoppelement möglich.

Die Erfindung ist durch die Merkmale der Ansprüche 2 bis 15 vorteilhaft weitergebildet.

Die Anordnung von zwei Magneten vor einer Abzweigung gestattet das Stoppen, Vereinzeln und gesteuerte Abzweigen von Paletten. Dabei kann die auf die Palette aufgesetzte Spule in ihrer zwischen den beiden Magneten liegenden Stopp-Position von einem Sensor auf Fadenreste oder auch zum Beispiel die Partie, von der sie stammt, untersucht werden, wonach der zweite Magnet durch die Dauer seiner Einschaltzeit die weitere Transportrichtung der Palette bestimmt.

Durch eine spezielle Ausbildung von Führungskanten für die Paletten, durch die sie den Magneten zugeführt werden, kann der Staudruck nachfolgender, eventuell aufgestauter Paletten formschlüssig abgefangen werden.

Die Erfindung soll anhand von Auführungsbeispielen näher erläutert werden. Dabei beziehen sich die Ausführungsbeispiele auf eine automatische Spulmaschine. Daraus ergibt sich jedoch keinerlei Einschränkung der Erfindung. Es zeigen:
- Fig. 1: eine Abzweigung an einer Transportbahn mit einer Elektromagnetenanordnung zum Stoppen, Vereinzeln und Abzweigen von Paletten,
- Fig. 2: einen Ausschnitt einer Transportbahn mit einer aus einem Elektromagneten und einem Stoppelement bestehenden Stopp- und Vereinzelungsvorrichtung,
- Fig. 3: eine Palette mit aufgesetztem Kops und Metallring mit Kunststoffschicht,
- Fig. 4: die Vorderansicht einer Palette beim Transport entlang einer Elektromagnetanordnung,
- Fig. 5: eine Vorderansicht einer Palette mit aufgesetztem Kops und mit abgeschrägter Unterkante der Grundplatte neben einem im Schnitt dargestellten Elektromagneten mit Abrollprofil,

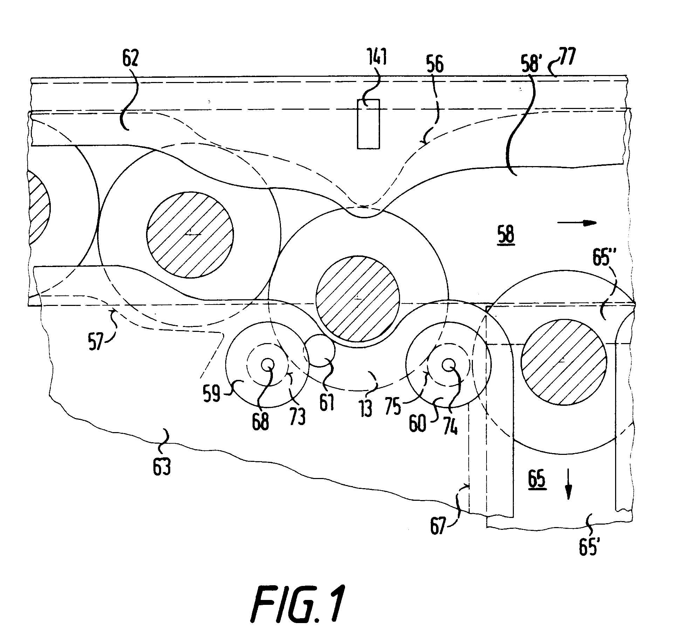

Die in Fig. 1 dargestellte erste Variante der Erfindung zeigt eine Abzweigung innerhalb eines Transportsystemes für Paletten 13, 13' oder 13''. Eine derartige Abzweigung kann an einer Spulmaschine zum Beispiel an einem Zuführweg angeordnet sein, der zu den Spulstellen führt und an dem die Paletten 13 mit aufgesetzten Kopsen 14 verschiedenen Spulabschnitten, zum

Beispiel bei einer Mehrpartienverarbeitung in Abhängigkeit von der Partie, zugeführt werden. Ebenso ist ein gleichmäßiges Verteilen der Kopse auf in die Spulmaschinensektionen integrierte Vorbereitungseinrichtungen möglich, deren Staustrecken gegebenenfalls über Sensoren überwacht werden.

Ebenso ist die Anordnung einer derartigen Abzweigung an einer Rückführbahn der aus den Spulstellen ausgetragenen Paletten 13 denkbar. An einer solchen Stelle würden dann zum Beispiel Paletten abgezweigt, die noch Hülsen mit mehr oder weniger großem Bewicklungsrest oder auch zum Beispiel nicht vorbereitete Kopse tragen.

Die Paletten 13 werden entlang einer Transportbahn 58 mittels Reibschluß durch ein Transportband 58' transportiert. Dabei sind die Paletten 13 an ihren Grundplatten seitlich durch Führungskanten 56 und 57 geführt.

Im vorliegenden Beispiel sind die Führungskanten 56 und 57 so ausgebildet, daß sie die Paletten 13 schon vor Erreichen eines ersten Elektromagneten 59 senkrecht zur Transportrichtung des Transportbandes 58' verschieben. Dabei wird durch eine relativ starke Richtungsänderung, insbesondere durch die Gestaltung der Führungskante 56, eine je nach Rückstaulänge mehr oder weniger starke Schubkraft der Paletten abgefangen, die dann nur noch wesentlich abgeschwächt im Bereich der Stopp-Position zwischen dem Elektromagneten 59 und einem stromab gelegenen weiteren Elektromagneten 60 wirkt. Hinzu kommt, daß die Paletten 13 durch diese Richtungsänderung nur noch mit einem Teil ihrer Grundfläche auf dem Transportband 58' aufliegen, wodurch sich die in dessen Transportrichtung wirkende Kraftkomponente ebenfalls verringert.

Durch die beschriebenen Führungskanten 56 und 57 werden die Paletten direkt einem Führungsprofil 73 des Elektromagneten 59 zugeleitet, auf dem sie unter der Wirkung der Magnetkraft abrollen. Dabei wird die Abrollbewegung durch das Transportband 58' noch unterstützt, auf dem die Palette 13 nur noch zum Teil aufliegt.

Ein Näherungssensor 61 erkennt die Ankunft beziehungsweise den Beginn des Abrollens einer Palette 63 auf dem Abrollprofil 73 des Elektromagneten 59. Durch seine Verbindung zu einer nicht dargestellten Steuereinheit wird das Aktivieren des Elektromagneten 60 mit einem Abrollprofil 75 bewirkt. Die Palette 13 nimmt dann eine stabile Lage zwischen den beiden Elektromagneten 59 und 60 ein, wobei sie an beiden Abrollprofilen 73 und 75 anliegt. Besonders vorteilhaft ist es, wenn ein Sensor 141 so angeordnet ist, daß er den auf der Palette 13 aufgesteckten Kops 14 beziehungsweise die Hülse 15 während der Ruhestellung der Palette 13, vorzugsweise fotooptisch, abtasten kann. Je nach Anordnung der Abzweigung kontrolliert der Sensor 141 die Partie des jeweiligen Kopses 14 beziehungsweise den auf der Hülse 15 noch befindlichen Bewicklungsrest.

Dieser Sensor 141 übermittelt dann der nicht dargestellten Steuereinheit ein Signal, welches in der zentralen Steuereinheit nach vorgegebenen Kriterien bewertet wird und in ein Steuersignal für die Elektromagneten 59 und 60 gewandelt wird. Ist zum Beispiel der Weitertransport der Palette 13 entlang der Transportbahn 58 vorgesehen, können beide Elektromagnete 59 und 60 abgeschaltet werden. Dadurch wird die Palette 13 vom Transportband 58' mitgenommen und an der Abzweigung einer Transpoprtbahn 65 vorbeigeführt.

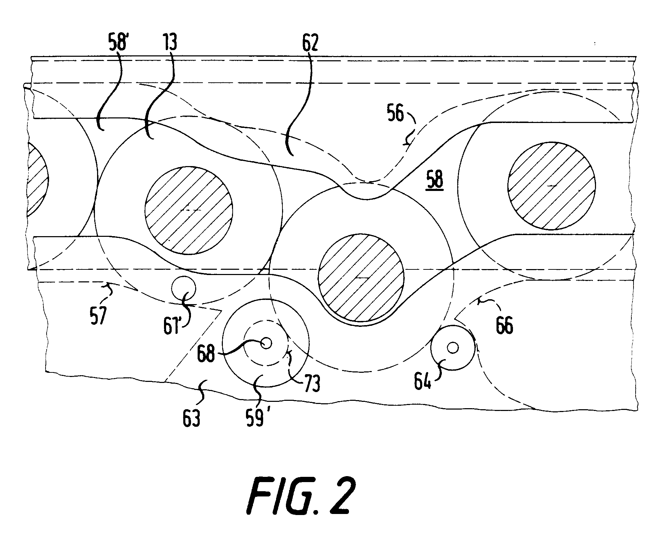

Obwohl das Abrollprofil 75 des Magneten 60 die Palette 13 bereits wieder weiter auf das Transportband 58' verschiebt, kann hinter der Abzweigung eine hier nicht dargestellte weitere Führungskante 66 (siehe Fig. 2) die Palette 13 noch weiter in dieser Richtung verschieben.

Nach einer kurzen vorgebbaren Pause, die insbesondere durch die Transportgeschwindigkeit des Transportbandes 58' bestimmt wird, wird der Elektromagnet 59 wieder eingeschaltet, um die nachfolgende Palette 13 zu stoppen.

Liegen die vom Sensor 141 ermittelten Werte für den Kops 14 beziehungsweise die Hülse 15 außerhalb der an der zentralen Steuereinheit vorgegebenen Toleranzen, was ein Abzweigen der Palette in die Transportbahn 65 erforderlich macht, wird nach dem Abschalten des Elektromagneten 59 der Elektromagnet 60 noch unter Spannung gehalten. Dadurch rollt die Palette 13 so weit auf dem Abrollprofil 75 des Elektromagneten 60 ab, bis sie die zur Transportbahn 65 gehörige Führungskante 67 erreicht. Diese Palette 13 wird dann vom Transportband 65', welches durch eine Umlenkrolle 65'' umgelenkt und von einem nicht dargestellten Motor angetrieben wird, entlang der Transportbahn 65 weiter mitgenommen.

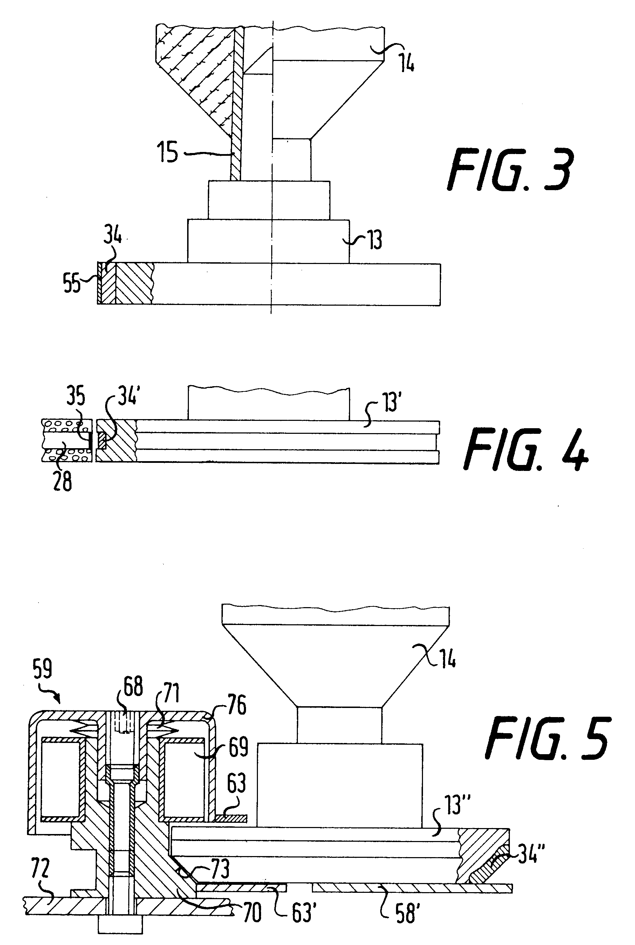

Deckplatten 62 und 63 sind hauptsächlich dafür vorgesehen, zumindest einen Teil der Grundplatten der Paletten 13 so abzudecken, daß diese Paletten 13, zum Beispiel durch äußere Einwirkungen auf die Kopse 14 oder die Hülsen 15, nicht kippen können. Vom Maschinenrahmen ist hier lediglich das Rahmenteil 77 zu erkennen, an welchem unter anderem die Deckplatte 62 befestigt ist. Die Elektromagnete 59 und 60 sind mittels Befestigungsschrauben 68 und 74 am Grundrahmen 72 (siehe Fig. 5) befestigt.

Die Anordnung der beiden Elektromagnete 59 und 60 ermöglicht gleichzeitig ein Stoppen, Vereinzeln und gesteuertes Abzweigen von Paletten. Hier sind keine mechanisch bewegten Teile vorhanden, die direkt in den Transportweg ragen.

Die in Fig. 2 dargestellte Variante der Erfindung beschreibt eine Stopp- und Vereinzelungsvorrichtung für Paletten 13, die entlang eines Transportweges 58 angeordnet ist. Die Bahnführung entspricht dabei der im vorigen Ausführungsbeispiel beschriebenen. Allerdings ist der Elektromagnet 60 hier durch einen Stopper 64 ersetzt. Die jeweils in der Stopp-Position befindliche Palette 13 nimmt dabei eine stabile Lage zwischen dem Abrollprofil 73 des Elektromagneten 59 und dem Stopper 64 ein. Nach dem Abschalten des Elektromagneten 59 verläßt diese Palette 13 diese Position, indem sie durch die Reibkraft des Transportbandes 58' mitgenommen wird und vom Stopper auf ein Profil 66 abrollt, welches die Palette 13 dem normalen Transportweg 58 wieder zuführt.

Gemäß diesem Ausführungsbeispiel ist es vorteilhaft, einen Näherungssensor 61' bereits stromauf zum Elektromagneten 59 anzuordnen, wenn nur dieser Elektromagnet 59 steuerbar ist.

Alle Näherungssensoren der bisherigen Ausführungsbeispiele können induktiv wirkende Sensoren sein, da die Paletten 13 in jedem Fall zumindest teilweise aus ferromagnetischem Material bestehen. Derartige Sensoren sind sehr zuverlässig und wenig kostenaufwendig.

Die Elektromagnete können sowohl auf ihrer Vorderseite eine zusammenhängende Abdeckung 35 als auch die Metallringe 34 der Paletten 13 eine Kunststoffschicht 55 tragen (s. Fig. 3). Auf diese Weise wird die Entstehung von Metallstaub beim Transport der Paletten 13 verhindert. Da sowohl die Dicke der Abdeckung 35 als auch die Dicke der Kunststoffschicht 55 sehr gering gehalten werden können, wird die Wirkung der Magnetkräfte kaum beeinträchtigt.

Die Fig. 4 zeigt eine Variante der Gestaltung des Metallringes 34'. Dabei ist die äußere Oberfläche dieses Metallringes 34' geringfügig zurückgesetzt. Auch dadurch wird ein Kontakt zur Magnetanordnung vermieden.

Die in Fig. 5 dargestellte Variante einer Palette 13'' mit Metallring 34'' weist den Vorteil auf, daß auch bei innerhalb eines Transportsystemes möglichen Abstufungen und Kanten kein Stau auftritt. Außerdem sind derartige Paletten geeignet, während ihres Transportes eine Richtungsänderung aus der Horizontalen oder in die Horizontale ohne Probleme zu gewährleisten.

Die Fig. 5 zeigt des weiteren neben der Palette 13'' beispielhaft einen Elektromagneten 59 aus dem vorangehenden Ausführungsbeispiel gemäß Fig. 5 und Fig. 6. Dabei ist in dieser Figur deutlich zu erkennen, daß das Abrollprofil 73 der Form der Palette angepaßt ist.

Der Elektromagnet 59, der mittels einer Befestigungsschraube 68 am Grundrahmen 72 befestigt ist, besitzt ein Gehäuse 76. Zwischen diesem Gehäuse 76 und dem Eisenkern 70 des Elektromagneten ist eine Distanzscheibe 71 aus nichtleitendem Material angeordnet. Die Spule selbst ist mit 69 bezeichnet. Der Eisenkern 70, in den das Abrollprofil 73 eingearbeitet ist, besitzt auch noch eine Gleitplatte 63' für das Abstützen der jeweiligen Palette 13''.

Wie diese Ausführungsbeispiele zeigen, liegen die einzigen drehenden Teile innerhalb des gesamten Transportsystemes, die Antriebs- und Umlenkrollen der Transportbänder, von denen die Paletten mittels Reibschluß innerhalb bestimmter Transportabschnitte transportiert werden, außerhalb dieser Transportabschnitte. Somit greifen bei diesen Beispielen keinerlei mechanisch bewegte Teile in die Transportbahnen ein, in denen sich Schleppfäden verfangen könnten.

## Patentansprüche

1. Textilmaschine mit einem automatischen Transportsystem zum Transport von Textilspulen beziehungsweise Hülsen, die einzeln auf Paletten (13; 13'; 13'') aufgesetzt sind, entlang vorgegebener Transportbahnen (58) mit Führungsmitteln (56, 57, 66, 67) zum im wesentlichen seitlichen Führen der Paletten,
**dadurch gekennzeichnet**,
daß die Paletten (13; 13'; 13'') an ihrem Umfang mit einem Metallring (34; 34'; 34'') versehen sind, daß je ein Elektromagnet (28; 59, 60; 59') als konvex gekrümmter Abschnitt (73, 75) der Führungsmittel ausgebildet ist und daß Mittel zum gesteuerten Aktivieren des Elektromagneten (28; 59, 60; 59') vorgesehen sind.

2. Textilmaschine nach Anspruch 1, dadurch gekennzeichnet, daß der Elektromagnet (59, 60; 59') an einer Transportbahn (58) angeordnet ist, die mechanische Mittel (58) besitzt, um durch Reibschluß die Paletten (13, 13', 13'') zu transportieren.

3. Textilmaschine nach Anspruch 1 oder 2, dadurch gekennzeichnet, daß der Elektromagnet (60) an einer Abzweigung der Transportbahn (58) angeordnet ist.

4. Textilmaschine nach einem der Ansprüche 1 bis 3, dadurch gekennzeichnet, daß zwei Elektromagnete (59, 60) in einem Abstand zueinander angeordnet sind, der geringer als der Durchmesser der Grundplatte der Paletten (13; 13'; 13'') ist.

5. Textilmaschine nach Anspruch 4, dadurch gekennzeichnet, daß der stromab an der Transportbahn (58) gelegene Elektromagnet (60) so angeordnet ist, daß sein Abrollprofil (75) gleichzeitig die innere Umlenkkante für die Paletten (13; 13'; 13'') in eine Abzweigbahn (65) bildet.

6. Textilmaschine nach Anspruch 4 oder 5, dadurch gekennzeichnet, daß zwischen den Magneten (59, 60) ein Näherungssensor (61) angeordnet ist, der mit einer Schaltung verbunden ist, die bei Ankunft einer Palette (13, 13'; 13'') den Magneten (60) aktiviert.

7. Textilmaschine nach Anspruch 6, dadurch gekennzeichnet, daß der Näherungssensor (61) eine Schaltung besitzt, die nach erkanntem durch Abschalten des Magneten (59) erfolgtem Abtransport der Palette (13; 13'; 13'') diesen Magneten (59) erneut aktiviert.

8. Textilmaschine nach einem der Ansprüche 4 bis 7, dadurch gekennzeichnet, daß die Magnete (59, 60) im aktivierten Zustand unterschiedliche Polarität besitzen.

9. Textilmaschine nach einem der Ansprüche 4 bis 8, dadurch gekennzeichnet, daß an der Transportbahn (58) im Bereich der zwischen den Magneten (59, 60) liegenden Ruhestellung der jeweiligen gestoppten Palette (13; 13'; 13'') ein Sensor 141 angeordnet ist, der spezielle Merkmale eines durch die Palette transportierten Kopses (14) beziehungsweise einer Hülse (15), wie Bewicklungsrest oder Partie, erkennt und daß dieser Sensor (141) eine Schaltverbindung zum stromab gelegenen Magneten (60) aufweist, durch die die Zeitdauer der Aktivierung dieses Magneten (60) steuerbar ist.

10. Textilmaschine nach Anspruch 2, dadurch gekennzeichnet, daß stromab zu dem entlang der Transportbahn (58) angeordneten und ein Abrollprofil (73) aufweisenden Magneten (59) in einem Abstand, der geringer als der Durchmesser der Grundplatte der Paletten (13; 13'; 13'') ist, ein Stoppelement (64) angeordnet ist.

11. Textilmaschine nach einem der Ansprüche 1 bis 10, dadurch gekennzeichnet, daß Führungskanten (56, 57) für die Paletten (13; 13'; 13'') stromauf des Magneten (59) so ausgebildet sind, daß sie die Paletten auf der Führungsbahn senkrecht zur Transportrichtung und in Richtung auf diesen Magneten verschieben.

12. Textilmaschine nach Anspruch 11, dadurch gekennzeichnet, daß eine weitere Führungskante (66) stromab angeordnet ist, die die Paletten (13; 13'; 13'') senkrecht zur Transportrichtung und vom Elektromagneten (59, 60; 59') weg verschiebt.

13. Textilmaschine nach Anspruch 1, dadurch gekennzeichnet, daß die Mittel durch eine Steuereinrichtung gebildet sind, durch die der Elektromagnet (28; 59, 60; 59') zeitgetaktet aktivierbar ist.

14. Textilmaschine nach Anspruch 1, dadurch gekennzeichnet, daß der Metallring (34'') der Palette (13'') eine abgeschrägte Kante besitzt.

15. Textilmaschine nach Anspruch 6 oder 7, dadurch gekennzeichnet, daß die Näherungssensoren (61; 61') induktiv wirkende Sensoren sind, die die Paletten (13; 13'; 13'') an ihren Metallringen (34; 34'; 34'') erkennen.

## Claims

1. A textile machine with an automatic transport system for transporting textile bobbins or tubes which are set up individually on pallets (13; 13'; 13''), along predetermined transport paths (58) with guide means (56, 57, 66, 67) for substantially lateral guidance of the pallets, characterised in that the pallets (13; 13'; 13'') are on their periphery provided with a metal ring (34; 34'; 34'') and in that in each case there is an electromagnet (28; 59, 60; 59') which is constructed as a convexly curved portion (73, 75) of the guide means and in that means are provided for the controlled activation of the electromagnet (28; 59, 60; 59').

2. A textile machine according to Claim 1, characterised in that the electromagnet (59, 60; 59') is disposed on a transport path (58) having mechanical means (58) for transporting the pallets (13, 13', 13'') by frictional engagement.

3. A textile machine according to Claim 1 or 2, characterised in that the electromagnet (60) is disposed on a branch of the transport path (58).

4. A textile machine according to one of Claims 1 to 3, characterised in that two electromagnets (59, 60) are disposed at a distance from each other which is less than the diameter of the base plate of the pallets (13; 13'; 13'').

5. A textile machine according to Claim 4, characterised in that the electromagnet (60) situated downstream on the transport path (58) is so disposed that its rolling profile (75) at the same time forms the inner deflecting edge for the pallets (13; 13'; 13'') into a branch path (65).

6. A textile machine according to Claim 4 or 5, characterised in that there is between the magnets (59, 60) a proximity sensor (61) which is connected to a circuit which activates the magnet (60) when a pallet (13; 13'; 13'') arrives.

7. A textile machine according to Claim 6, characterised in that the proximity sensor (61) has a circuit which, after recognising the fact that the pallet (13; 13'; 13'') has been removed by the magnet (59) being switched off, activates this magnet again.

8. A textile machine according to one of Claims 4 to 7, characterised in that in the activated state, the magnets (59, 60) possess different polarity.

9. A textile machine according to one of Claims 4 to 8, characterised in that on the transport path (58) in the region of the inoperative position of whichever pallet (13; 13'; 13'') has stopped and which is in between the magnets (59, 60) there is a sensor (141) which recognises special features of a cop (14) or tube (15) transported by the pallet, such as a winding residue or part and in that this sensor (141) has a switching connection to the downstream magnet (60) by which it is possible to control the period of time for which this magnet (60) is activated.

10. A textile machine according to Claim 2, characterised in that downstream of the magnet (59) disposed along the transport path (58) and comprising a rolling profile (73) there is a stopping element (64) at a distance which is shorter than the diameter of the base plate of the pallets (13; 13'; 13'').

11. A textile machine according to one of Claims 1 to 10, characterised in that guide edges (56, 57) for the pallets (13; 13'; 13'') upstream of the magnet (59) are so constructed that they displace the pallets on the transport path at right-angles to the transport direction and in the direction of this magnet.

12. A textile machine according to Claim 11, characterised in that a further guide edge (66) is disposed downstream and displaces the pallets (13; 13'; 13'') away at right-angles to the direction of transport and away from the electromagnet (59, 60; 59').

13. A textile machine according to Claim 1, characterised in that the means are constituted by a control arrangement by which the electromagnet (28; 59, 60; 59') can be activated in a time-related rhythm.

14. A textile machine according to Claim 1, characterised in that the metal ring (34'') if the pallet (13'') has a chamfered edge.

15. A textile machine according to Claim 6 or 7, characterised in that the proximity sensors (61; 61') are inductively acting sensors which recognise the pallets (13; 13'; 13'') from their metal rings (34; 34'; 34'').

## Revendications

1. Machine textile comprenant un système automatique de transport pour déplacer des bobines ou des busettes textiles, respectivement, qui sont posées individuellement sur des supports individuels (13 ; 13' ; 13'') le long de voies de transport prédéterminées (58), celles-ci étant pourvues de moyens de guidage (56, 57, 66, 67) qui sont destinés à guider les supports individuels, pour l'essentiel latéralement, caractérisée par le fait que les supports individuels (13 ; 13' ; 13'') sont munis sur leur pourtour d'une bague métallique (34 ; 34' ; 34''), par le fait qu'un électroaimant (28 ; 59, 60 ; 59') est à chaque fois réalisé sous la forme d'une partie à courbure convexe (73, 75) des moyens de guidage, et par le fait qu'il est prévu des moyens pour l'activation asservie de l'électroaimant (28 ; 59, 60 ; 59').

2. Machine textile selon la revendication 1, caractérisée par le fait que l'électroaimant (59, 60 ; 59') est disposé sur une voie de transport (58) qui comporte des moyens mécaniques (58) pour transporter les supports individuels (13 ; 13' ; 13'') par conjugaison par frottement.

3. Machine textile selon la revendication 1 ou 2, caractérisée par le fait que l'électroaimant (60) est disposé sur une bifurcation de la voie de transport (58).

4. Machine textile selon l'une des revendications 1 à 3, caractérisée par le fait que deux électroaimants (59, 60) sont disposés à une distance l'un de l'autre qui est inférieure au diamètre de la plaque de base des supports individuels (13 ; 13' ; 13'').

5. Machine textile selon la revendication 4, caractérisée par le fait que l'électroaimant (60) qui est situé en aval sur la voie de transport (58) est disposé d'une manière telle que son profil de roulement (75) constitue en même temps le bord intérieur qui dévie les supports individuels (13 ; 13' ; 13'') vers une voie de bifurcation (65).

6. Machine textile selon la revendication 4 ou 5, caractérisée par le fait qu'un détecteur de proximité (61) relié à un circuit qui active l'aimant (60) lors de l'arrivée d'un support individuel (13 ; 13' ; 13'') est disposé entre les aimants (59, 60).

7. Machine textile selon la revendication 6, caractérisée par le fait que le détecteur de proximité (61) comporte un circuit qui active à nouveau l'aimant (59) après que l'on a détecté que le support individuel (13 ; 13' ; 13'') a été évacué du fait de la mise hors circuit de cet aimant (59).

8. Machine textile selon l'une des revendications 4 à 7, caractérisée par le fait que les aimants (59, 60) présentent une polarité différente dans leur état activé.

9. Machine textile selon l'une des revendications 4 à 8, caractérisée par le fait qu'un capteur (141) est disposé sur la voie de transport (58) dans la région où chaque support individuel (13 ; 13' ; 13'') est arrêté dans la position de repos située entre les aimants (59, 60), et qu'il détecte les caractéristiques spécifiques d'une canette (14) ou d'une busette (15), respectivement, qui est transportée par le support individuel, comme un reste d'enroulement ou un lot, et par le fait que ce capteur (141) comporte une liaison opérationnelle avec l'aimant (60) situé en aval, liaison au moyen de laquelle on peut agir sur la durée d'activation de cet aimant (60).

10. Machine textile selon la revendication 2, caractérisée par le fait qu'un élément d'arrêt (64) est disposé en aval de l'aimant (59) qui est disposé le long de la voie de transport (58) et qui présente un profil de roulement (73), et ce, à une distance qui est inférieure au diamètre de la plaque de base des supports individuels (13 ; 13' ; 13'').

11. Machine textile selon l'une des revendications 1 à 10, caractérisée par le fait que des bords de guidage (56, 57) destinés aux supports individuels (13 ; 13' ; 13'') en amont de l'aimant (59) sont conformés d'une manière telle qu'ils déplacent les supports individuels sur la voie de transport perpendiculairement à la direction de transport et dans la direction de cet aimant.

12. Machine textile selon la revendication 11, caractérisée par le fait qu'un autre bord de guidage (66) est disposé en aval, et qu'il déplace les supports individuels (13 ; 13' ; 13'') perpendiculairement à la direction de transport et en les éloignant de l'électroaimant (59, 60 ; 59').

13. Machine textile selon la revendication 1, caractérisée par le fait que lesdits moyens sont constitués par un dispositif de commande au moyen duquel l'électroaimant (28 ; 59, 60 ; 59') peut être activé en synchronisme.

14. Machine textile selon la revendication 1, caractérisée par le fait que la bague métallique (34'') du support individuel (13'') présente un bord chanfreiné.

15. Machine textile selon la revendication 6 ou 7, caractérisée par le fait que les détecteurs de proximité (61; 61') sont des capteurs à effet inductif qui reconnaissent les supports individuels (13 ; 13' ; 13'') par leurs bagues métalliques (34 ; 34' ; 34'').
